Europäisches Patentamt

(19) European Patent Office

Office européen des brevets

(11) Publication number: **0 145 085**
A2

(12) **EUROPEAN PATENT APPLICATION**

(21) Application number: **84201762.6**

(22) Date of filing: **30.11.84**

(51) Int. Cl.⁴: **A 23 D 3/00**
A 23 D 3/02, A 23 D 5/00
A 23 D 5/02, A 23 G 1/00

(30) Priority: **01.12.83 NL 8304134**

(43) Date of publication of application:
**19.06.85 Bulletin 85/25**

(84) Designated Contracting States:
**AT BE CH DE FR GB IT LI NL SE**

(71) Applicant: **UNILEVER NV**
**Burgemeester s'Jacobplein 1 P.O. Box 760**
**NL-3000 DK Rotterdam(NL)**

(84) Designated Contracting States:
**BE CH DE FR IT LI NL SE AT**

(71) Applicant: **UNILEVER PLC**
**Unilever House Blackfriars P O Box 68**
**London EC4P 4BQ(GB)**

(84) Designated Contracting States:
**GB**

(72) Inventor: **Bodor, Janos**
**Benoordenhoutseweg 92**
**NL-2596 BD The Hague(NL)**

(72) Inventor: **Reckweg, Freek**
**20, Well Field**
**Hartley Kent DA3 7EQ(GB)**

(72) Inventor: **van Bodegom, Bertus Marinus**
**Populierendreef 147**
**NL-3137 CV Vlaardingen(NL)**

(72) Inventor: **van Heteren, Jan**
**Acaciadreef 14**
**NL-3137 BB Vlaardingen(NL)**

(74) Representative: **Léon, Alain Elie, Dr. et al,**
**Unilever N.V. Patent Division P.O. Box 137**
**NL-3130 AC Vlaardingen(NL)**

(54) **Edible oil-in-water emulsions.**

(57) An edible, oil-in-water emulsion containing 8-70 wt.% of a monosaccharide, an oligosaccharide, a polysaccharide or mixtures thereof having a solubility in water which is less than that of sucrose, and optionally other sugars, at least 5 wt.% of the total emulsion consisting of said saccharides and other sugars which at 20°C are present in the form of crystals or solid particles having a major dimension not exceeding 40 microns.

0145085

## EDIBLE OIL-IN-WATER EMULSIONS

The invention relates to edible oil-in-water emulsions in the form of a paste, a spread having the plasticity of margarine, or a bar such as a chocolate bar.

The invention particularly relates to sweet emulsions with a relatively high level of carbohydrates, such as mono-, oligo- or polysaccharides, and with a reduced level of fat compared to margarines.

Sweet spreads and bars with a low level of water (less than 20%) or even substantially free from water are known. Attempts have been made to reduce the ingredient costs of such products by increasing their level of water, but this always resulted in products with poor organoleptic properties and in the aspect of such products being detrimentally affected. The problems encountered were a burning sensation in the mouth, an unacceptable colour (i.e. products containing cacao powder are too dark, whereas other products which do not contain cacao powder are translucent) and a poor texture.

Applicants have found new oil-in-water (o/w) emulsions which do not display these drawbacks, and a process for producing such emulsions.

The edible oil-in-water emulsions according to the invention comprise a dispersed fatty phase constituting 5-60 wt.% of the total emulsion and a continuous aqueous phase constituting 40-95 wt.% of the total emulsion, said emulsion containing 8-70 wt.% of a monosaccharide, an oligosaccaharide, a polysaccharide or a mixture of these saccharides having a solubility in water which is lower than that of sucrose and optionally other sugars, at least 5 wt.% of the total emulsion consisting of said saccharides and other sugars which at 20°C are present in the form of crystals or solid particles having a major dimension not exceeding 40 microns.

The preferred level of saccharides having a solubility in water which is lower than that of sucrose ranges from 10-60 wt.% of the total emulsion.

The preferred size of the crystals or solid particles (major dimension) ranges from 2-25 microns, and ideally less than 10% of the crystals or particles have a size exceeding 25 microns. Crystals or particles having a size greater than 40 microns impart sandiness to the product.

The preferred saccharide having a solubility lower than that of sucrose consists of dextrose, lactose or of mixtures of these monosaccharides.

Dextrose is preferably present at a level ranging from 15-70 wt.%, whereas the preferred level of lactose ranges from 8-60 wt.%, based on the total emulsion.

In some cases polysaccharides and particularly starch in the native, non-gelatinised, crystalline state can be present. Such starch preferably consists of a starch selected from the group consisting of rice starch, millet starch, oat starch, buckwheat starch and yam starch, which consist of relatively small granules having a major dimension of less than 25 microns and particularly within the range of 4-15 microns. Such starches are present at a level ranging from 3 to 25 wt.%, preferably 7-20 wt.%, based on total emulsion.

The above-described mono-, oligo- and polysaccharides can be used along with sucrose.

In a preferred emulsion according to the invention 5-50 wt.% dextrose and 5-25 wt.% sucrose are present, with the proviso that the sum of the percentages of these is less than 65 wt.%.

The fatty phase contains a fat or fat blend, the choice of which will depend on the product aimed at.

The fat components of the fat blend may consist of vegetable or animal fats which may be hydrogenated, interesterified or fractionated. Suitable animal fats may consist of butterfat, tallow or hydrogenated fish oil. Suitable vegetable fats may consist of palm oil, lauric fats such as coconut fat, palmkernel fat or babassu fat; further soybean oil, sunflower oil, rapeseed oil, cottonseed oil, maize oil and the like.

The fat solids profile of a fat blend suitable for most applications will be as follows:

$N_{10^\circ C}$ = 10-95; $N_{20^\circ C}$ = 5-80; $N_{30^\circ C}$ = 0-65; $N_{35^\circ C}$ = 0-15 (determined by nuclear magnetic resonance (NMR) analysis).

The hardness of the products according to the invention, measured at a temperature ranging between 20 and 35°C as C value, may vary from 30 to 6000 g/cm$^2$ (determined according to J. Am. Oil Chem. Soc. 36 (1959), pp 345-348).

Fat blends for o/w emulsion spreads preferably have the following fat solids profile:

$N_{10^\circ C}$ = 10-45; $N_{20^\circ C}$ = 5-25; $N_{30^\circ C}$ = 0-10; $N_{35^\circ C}$ = 0-5.

For producing an emulsion in the form of a hard snack, for example a bar of chocolate, then the fatty phase will generally contain a fat having the following solid fat profile:

$N_{10°C} = 70\text{-}95;\ N_{20°C} = 50\text{-}85;\ N_{30°C} = 0\text{-}65;\ N_{35°C} = 0.10.$

In the case of o/w emulsions which can serve as hard snacks, for example chocolate-like bars, suitable fats comprise hard, high-melting fats having a steep dilatation curve, which at 20°C have a fairly high content of solid fat, but which at 35°C contain practically no solid fat.

For these products, a wide range of hydrogenated or non-hydrogenated fats and fractions derived from them are suitable. These fats may include cacao butter and substitutes therefor, such as palm-mid-fractions, palmkernel oil, coconut oil, babassu oil, murumuru oil, tucum oil and ouricurum oil.

The emulsions according to the invention may further contain flavouring agents soluble or dispersible in water or fat, such as cacao powder and hazelnut paste.

The microbiological stability of the products according to the invention is secured by preservative agents, such as potassium sorbate, a reduced pH (4.0-6.0) and by a low water activity which may range from 0.7 to 0.9.

The o/w emulsions according to the present invention can be produced according to a process comprising:

(a) preparing an aqueous phase from water, a mono-, oligo- or polysaccharide having a solubility in water which is less than that of sucrose, and optionally other sugars, said aqueous phase constituting 40-95 wt.% of the total emulsion and said saccharides constituting 8-70 wt.% of the total emulsion;

(b) emulsifying 5-60 wt.% of a molten fatty phase in said aqueous phase;

(c) cooling the emulsion thus obtained to the temperature of crystallisation; and, if necessary,

(d) adding a mono-, oligo- or polysaccharide in the form of seed crystals or in the form of an amorphous seeding material, such as spray-dried whey powder, from which, on contact with moisture, crystals develop spontaneously to form an emulsion containing crystals or solid particles of said saccharides and other sugars having a major dimension not exceeding 40 microns.

The preferred levels of aqueous phase, fatty phase and saccharides, and the preferred size of the crystals are as hereinbefore described.

The seeding material is preferably added in the form of a dispersion in oil or fat. Seed crystals having a major dimension ranging from 1-10 microns are preferred.

In step (a) the aqueous phase is generally warmed up to dissolve ingredients of the aqueous phase.

In step (c) the emulsion is cooled to a temperature below 45°C and particularly between 25 and 40°C.

In the case where starch is used, the starch is added separately after all the other ingredients of the aqueous phase have dissolved, and, if necessary, after cooling of the aqueous phase to a temperature at which the starch does not gelatinise and remains in the crystalline state (under the microscope, using polarised light, the granules should display birefringence).

The o/w emulsion can further be subjected to further treatments, e.g. to working and cooling, to produce a spread having a spreadability/plasticity similar to that of margarines or can be formed into snacks of various shapes such as bars, etc.

The invention will now be illustrated in the following examples:

## Example I

A water-continuous spread was produced, which had the following composition:

|  | % by weight |
|---|---|
| Fatty phase | 22.75 |
| Skimmilk powder | 8.20 |
| Sucrose | 14.00 |
| Dextrose monohydrate | 32.60 |
| NaCl | 0.10 |
| K-sorbate | 0.13 |
| Water | 16.96 |
| Seeding material [dispersion of 0.4 parts by weight of dextrose crystals (5 microns) in 2.8 parts by weight of fatty phase] | 4.20 |

The fatty phase consisted of:
21.2% by weight of fat, 0.25% by weight of lecithin and 2.3% by weight of cacao powder. The fat consisted for 40% of fish oil having a melting point of 39°C, for 33% of soya oil and for 27% of soya oil having a melting point of 30°C.

The aqueous phase was prepared by dissolving the dry ingredients in water of 50°C. The aqueous phase was subsequently pasteurised at 75°C, cooled to 60°C and finally emulsified with the molten fatty phase (50°C).

The emulsion was subsequently cooled to 39°C and the dispersion of dextrose seed crystals in oil (39°C) was added to it. The mixture was vigorously stirred, as a result of which complete or almost complete crystallisation occurred.

The emulsion (20°C) contained about 18 wt.% of saccharides and sugars in the crystalline state. About 90% of the crystals had a major dimension of 15 microns and smaller.

The o/w emulsion was subsequently texturised in a Votator ® (A-unit), whereby a spread was formed having a $c_{20°C}$ = 490 g/cm$^2$ and a $c_{25°C}$ = 225 g/cm$^2$.

This product was presented to a group of experts. The product gave no burning sensation in the mouth and had a good texture.

### Example II

A water-continuous spread was produced, which had the following composition:

|  | % by weight |
|---|---|
| Fat blend (of Example I) | 32.65 |
| Lecithin | 0.20 |
| Whey powder (45% protein) spray-dried | 7.00 |
| Lactose | 14.00 |
| Honey | 31.80 |
| K-sorbate | 0.15 |
| β-carotene (0.4% solution) | 0.20 |
| Water | 14.00 |

The lactose and the honey were dissolved in water at 90°C and the mixture was subsequently cooled to 40°C.

A mixture of the fat blend, lecithin, whey powder, K-

sorbate and $\beta$-carotene was produced at 40°C.

The fatty phase was emulsified with the aqueous phase and the emulsion was subsequently cooled to 30°C and stirred to allow crystallisation of lactose to take place.

The emulsion (20°C) contained about 11 wt.% of crystallised sugar. About 90% of the crystals had a major dimension not exceeding 15 microns.

The o/w emulsion was texturised in a Votator ® (A-unit) to obtain a spread. The spread was presented to a panel of experts. The product on consumption gave no burning sensation in the mouth and had a good texture, spreadability and visual appearance.

## Example III

A chocolate snack was produced, which had the following composition:

|  | % by weight |
| --- | --- |
| Cacao butter fat | 22.0 |
| Lecithin | 0.5 |
| Cacao powder | 6.5 |
| Skimmilk powder | 7.4 |
| Dextrose | 29.6 |
| Sucrose | 12.7 |
| K-sorbate | 0.1 |
| Seeding material [dispersion of 0.4 parts by weight of dextrose crystals (5 microns) in 2.8 parts by weight of cacao butter fat] | 4.2 |
| Water | 14.0 |

The emulsion was produced following the general procedure of Example I. The emulsion (20°C) contained about 16 wt.% of saccharides and sugars in the crystalline state. About 90% of the crystals had a major dimension of 15 microns or smaller.

From this emulsion a chocolate snack was produced. The chocolate snack was packed in alufoil to avoid evaporation of water.

The chocolate snack was presented to a panel of experts who found the texture and organoleptic properties were very similar to those of a common milk chocolate bar.

## CLAIMS

1.      An edible oil-in-water emulsion, comprising a dispersed fatty phase constituting 5-60 wt.% of the total emulsion and a continuous aqueous phase constituting 40-95 wt.% of the total emulsion, said emulsion containing 8-70 wt.% of a monosaccharide, an oligosaccaharide, a polysaccharide or a mixture of these saccharides having a solubility in water which is lower than that of sucrose and optionally other sugars, at least 5 wt.% of the total emulsion consisting of said saccharides and other sugars which at 20°C are present in the form of crystals or solid particles having a major dimension not exceeding 40 microns.

2.      An edible oil-in-water emulsion according to claim 1, wherein 10-60 wt.% of the total emulsion consists of mono-, oligo- and polysaccharides and optionally further other sugars, which at 20°C are present in the form of crystals or solid particles having a major dimension not exceeding 40 microns.

3.      An edible oil-in-water emulsion according to claim 1, wherein the major dimension of the crystals or solid particles ranges from 2 to 25 microns.

4.      An edible oil-in-wateremulsion according to claim 1, wherein the saccharide having a solubility which is lower than that of sucrose consists of dextrose, lactose or a native non-gelatinised, crystalline starch selected from the group consisting of rice starch, millet starch, oat starch, buckwheat starch and yam starch.

5.      An edible oil-in-water emulsion according to claim 4, comprising 15-70 wt.% of dextrose.

6. An edible oil-in-water emulsion according to claim 4, comprising 8-60 wt.% of lactose.

7. An edible oil-in-water emulsion according to claim 1, comprising a monosaccharide, an oligosaccharide, a polysaccharide or a mixture of these saccharides, and sucrose.

8. An edible oil-in-water emulsion according to claim 7, comprising 5-50 wt.% of dextrose and 5-25 wt.% of sucrose, the sum of the amounts of dextrose and sucrose being less than 65 wt.%.

9. An edible oil-in-water emulsion according to claim 1, wherein the fatty phase contains a fat having the following solid fat profile:
$N_{10°C} = 10-95; N_{20°C} = 5-80; N_{30°C} = 0-65; N_{35°C} = 0-15.$

10. An edible oil-in-water emulsion spread according to claim 9, wherein the fatty phase contains a fat having the following solid fat profile:
$N_{10°C} = 10-45; N_{20°C} = 5-25; N_{30°C} = 0-10; N_{35°C} = 0-5.$

11. An edible oil-in-water emulsion according to claim 9 in the form of a hard whack, wherein the fatty phase contains a fat having the following solid fat profile:
$N_{10°C} = 70-95; N_{20°C} = 50-85; N_{30°C} = 0-65; N_{35°C} = 0-10.$

12. An edible oil-in-water emulsion according to claim 1, having a hardness C, measured at a temperature between 20 and 35°C, of 30-1000 $g/cm^2$.

13. An edible oil-in-water emulsion according to claim 1, containing cacao powder, hazelnut paste or a mixture of both.

14.    An edible oil-in-water emulsion having a water activity between 0.7 and 0.9.

15.    A process for producing edible oil-in-water emulsions, comprising:

(a) preparing an aqueous phase from water, a mono-, oligo- or polysaccharide having a solubility in water which is less than that of sucrose, and optionally other sugars, said aqueous phase constituting 40-95 wt.% of the total emulsion and said saccharides constituting 8-70 wt.% of the total emulsion;

(b) emulsifying 5-60 wt.% of a molten fatty phase in said aqueous phase;

(c) cooling the emulsion thus obtained to the temperature of crystallisation; and, if necessary,

(d) adding a mono-, oligo- or polysaccharide in the form of seed crystals or in the form of an amorphous seeding material, such as spray-dried whey powder, from which, on contact with moisture, crystals develop spontaneously to form an emulsion containing crystals or solid particles of said saccharides and other sugars having a major dimension not exceeding 40 microns.

16.    A process according to claim 15, wherein the seeding material is added in the form of a dispersion in oil or fat.

17.    A process according to claim 15, wherein seed crystals having a major dimension ranging from 1-10 microns are used.

18.    A process according to claim 15, wherein in step (c) the emulsion is cooled to a temperature ranging from 25-40°C.

0145085

## CLAIMS

1.      A process for producing edible oil-in-water emulsions, characterised by:

(a) preparing an aqueous phase from water, a mono-, oligo- or polysaccharide having a solubility in water which is less than that of sucrose, and optionally other sugars, said aqueous phase constituting 40-95 wt.% of the total emulsion and said saccharides constituting 8-70 wt.% of the total emulsion;

(b) emulsifying 5-60 wt.% of a molten fatty phase in said aqueous phase;

(c) cooling the emulsion thus obtained to the temperature of crystallisation; and, if necessary,

(d) adding a mono-, oligo- or polysaccharide in the form of seed crystals or in the form of an amorphous seeding material, such as spray-dried whey powder, from which, on contact with moisture, crystals develop spontaneously to form an emulsion containing crystals or solid particles of said saccharides and other sugars having a major dimension not exceeding 40 microns.

2.      A process according to claim 1, characterised in that 10-60 wt.% of the total emulsion consists of mono-, oligo- and polysaccharides and optionally further other sugars, which at 20°C are present in the form of crystals or solid particles having a major dimension not exceeding 40 microns.

3.      A process according to claim 1, characterised in that the major dimension of the crystals or solid particles ranges from 2 to 25 microns.

4.      A process according to claim 1, characterised in that the saccharide having a solubility which is lower than that of sucrose consists of dextrose, lactose or a native non-gelatinised, crystalline starch selected from the group consisting of rice starch, millet starch, oat starch, buckwheat starch and yam starch.

5. A process according to claim 4, characterised in that 15-70 wt.% of dextrose is incorporated in the emulsion.

6. A process according to claim 4, characterised in that 8-60 wt.% of lactose is incorporated in the emulsion.

7. A process according to claim 1, characterized in that a monosaccharide, an oligosaccharide, a polysaccharide or a mixture of these saccharides, and sucrose are incorporated in the emulsion.

8. A process according to claim 1, characterised in that 5-50 wt.% of dextrose and 5-25 wt.% of sucrose are incorporated in the emulsion, with the proviso that the sum of the amounts of dextrose and sucrose is less than 65 wt.%.

9. A process according to claim 7, characterised in that the fatty phase contains a fat having the following solid fat profile:
$N_{10°C} = 10-95$; $N_{20°C} = 5-80$; $N_{30°C} = 0-65$; $N_{35°C} = 0-15$.

10. A process according to claim 9, characterised in that a spread is produced wherein the fatty phase contains a fat having the following solid fat profile:
$N_{10°C} = 10-45$; $N_{20°C} = 5-25$; $N_{30°C} = 0-10$; $N_{35°C} = 0-5$.

11. A process according to claim 9, characterised in that a hard snack is produced, wherein the fatty phase contains a fat having the following solid fat profile:

$N_{10°C} = 70-95$; $N_{20°C} = 50-85$; $N_{30°C} = 0-65$; $N_{35°C} = 0-10$.

12.      A process according to claim 1, characterised in that an emulsion is produced having a hardness C, measured at a temperature between 20 and 35°C, of 30-1000 g/cm$^2$.

13.      A process according to claim 1, characterised in that an emulsion is produced which contains cacao powder, hazelnut paste or a mixture thereof.

14.      A process according to claim 1, characterised in that an emulsion is produced which has a water activity ranging from 0.7 to 0.9.

15.      A process according to claim 1, characterised in that the seeding material is added in the form of a dispersion in oil or fat.

16.      A process according to claim 1, characterised in that seed crystals are added, which have a major dimension ranging from 1-10 microns.

17.      A process according to claim 1, characterised in that the emulsion is cooled to a temperature ranging from 25-40°C.